# EUROPEAN PATENT APPLICATION

(11) **EP 4 552 725 A1**
(43) Date of publication of application: **14.05.2025**
(21) Application number: 24207466.4
(22) Date of filing: 18.10.2024
(51) Int. Cl.: B01D 53/04, B01D 53/06, B01D 53/08

(54) **SCREW MOTION ASSISTED MODULAR ROTARY TRUE MOVING BED FOR GAS SEPARATION AND METHOD THEREOF**

(30) Priority: 09.11.2023 IN 202321076713
(71) Applicant: Tata Consultancy Services Limited, Maharashtra (IN)
(72) Inventor: Chaudhary, Ayush, 411057 Pune - Maharashtra (IN); Suhail, Mohammed, 411057 Pune - Maharashtra (IN); Badhan, Navneet Singh, 411057 Pune - Maharashtra (IN); Subramanian, Sivakumar, 411057 Pune - Maharashtra (IN); Runkana, Venkataramana, 411057 Pune - Maharashtra (IN); Prahlada Rao, Davuluri, 500049 Hyderabad - Telangana (IN)
(74) Representative: Goddar, Heinz J.

(57) **Abstract**

The available gas separation techniques in the industry include many drawbacks such as particle attrition, low adsorption rate, gas leakage and the like. The disclosed screw motion assisted modular rotary true moving bed for gas separation provides a design which helps to overcome these drawbacks. The disclosed gas separator includes an inner casing with a screw like threading on it which enables both rotational and translational movement by employing a prime driver outer casing driven by an elector-mechanical mechanism. This enables the usage of particulate adsorbent material in an efficient way. The disclosed design enables a greater exposure of the particulate adsorbent material which results in higher surface area availability for adsorption. The design of the screw motion assisted modular rotary true moving bed helps in using it in small-scale gas separation such as carbon dioxide capture from car exhaust and so on.

## Description

### CROSS-REFERENCE TO RELATED APPLICATIONS AND PRIORITY

The present application claims priority to Indian application no. 202321076713, filed on November 09, 2023.

### TECHNICAL FIELD

The disclosure herein generally relates to a gas separator, and, more particularly, to a screw motion assisted modular rotary true moving bed for gas separation and a method for gas separation using the same.

### BACKGROUND

Gas separation is a common technique for separating one or more gases from a gaseous mixture. It is important for numerous industrial operations, including the treatment of emissions from coal-fired power plants, or automobile exhausts. The aim is to remove carbon dioxide to lessen the greenhouse effect. Additional applications can be air-separation, removing CO₂ from natural gas, separation of ethylene from a mixture of ethylene and ethane. The affinity of the gas for a specific sorbent such as zeolites, silica-gel, or activated carbon, or a solvent such as MEA (mono-ethanolamine), is used to separate the gas (or vapor). In cryogenic distillation gases could be separated by increasing or decreasing the temperature and pressure of the system containing gases. This is done since liquified gaseous components have different boiling points in mixture, so they can be segregated into their individual components. Gas separation through membrane depends upon the affinities of one or more gases with the membrane material, leading to some molecules to permeate faster than the others. Solvent based technology for separating carbon dioxide from the gases have been commercially used for a long time. This solvent based technology is energy intensive compared to other technologies.

Adsorption employs porous materials to selectively adsorb one component from a mixture. It is more energy efficient process compared to others that may be utilized for gas separation and purification. Adsorption is used in several processes, including natural gas purification, air separation, and carbon capture and the like. It mainly consists of three process steps of adsorption, desorption or renewal of the adsorbent followed by cooling of the adsorbent material. The technology may be used in a variety of reactor configurations such as cyclical process steps with static beds, moving bed, or simulated moving beds and utilizing different regeneration mechanisms such as pressure swing, vacuum swing, temperature swing.

### SUMMARY

Embodiments of the present disclosure present technological improvements as solutions to one or more of the above-mentioned technical problems recognized by the inventors in conventional systems. For example, in one embodiment, a screw motion assisted modular rotary true moving bed for gas separation is provided. The screw motion assisted modular rotary true moving bed for gas separation includes a rotary true moving bed assembly forming a closed loop comprising a set of inner casings, a set of static outer casings, a set of prime driver outer casings, and a set of rotary joints. Each inner casing of the set of inner casings includes a plurality of modules, a set of gas slots on an external surface of the inner casing enabling flow of the gaseous mixture in and out of the inner casing and a threading on the external surface of the inner casing enabling rotation and translation of the inner casing across the rotary true moving bed assembly inside the set of static outer casings and the set of prime driver outer casings. Each module of the plurality of modules is separated by a gap and includes a front one-way valve and a back one-way valve enabling one directional flow of a gaseous mixture through the inner casing, and a front mesh and a back mesh holding particulate adsorbent material. The set of static outer casings provides support and passage to movement of the set of inner casings. Each static outer casing includes a first set of ports on an external surface of the static outer casing and a threading on at least part of internal surface of the static outer casing provides support to the set of inner casings. The set of prime driver outer casings causes the set of inner casings to rotate and translate using an electro- mechanical mechanism. The set of rotary joints provides leak proof coupling between the set of static outer casings and the set of prime driver outer casings.

The threading on at least part of the internal surface of the static outer casing enables prevention of gas leakage within a zone and isolation between a plurality of zones of the rotary true moving bed assembly. The plurality of zones includes one or more adsorption zones, one or more desorption zones, one or more heating zones, and one or more cooling zones.

The screw motion assisted modular rotary true moving bed for gas separation also includes a set of jackets. The set of jackets provides an external covering over the set of static outer casings for the one or more heating zones and the one or more cooling zones of the true moving bed during the temperature swing adsorption. The set of jackets comprises a second set of ports for circulating heating or cooling medium. During a direct heating of the particulate adsorbent material, the first set of ports facilitates in and out movement of a heating medium or a cooling medium from the true moving bed assembly. During an indirect heating of the particulate adsorbent material, the heating medium enters via the second set of ports circulates through the set of jackets to heat walls of the set of static outer casings and the set of inner casings in the one or more heating zones which is turn heats the particulate adsorbent material. Also, the cooling medium enters via the second set of ports circulates through the set of jackets to cool walls of the set of static outer casings and the set of inner casings in the one or more cooling zones which in turn cools the particulate adsorbent material.

The set of prime driver outer casings rotate and translate the set of inner casings at different speed at different time intervals within the true moving bed assembly. The rotary true moving bed assembly facilitates one of a temperature swing adsorption, a pressure swing adsorption, a vacuum swing adsorption, concentration swing adsorption or a combination thereof. A lubricant is used in a gap between the set of inner casings and the set of static outer casings to smoothen the motion.

In another embodiment, a process for separation of a target component from a gaseous mixture using a screw motion assisted modular rotary true moving bed is provided. The process includes, feeding, via a first set of ports, the gaseous mixture from a source to the screw motion assisted modular rotary true moving bed. Further the process includes, adsorbing, the target component from the gaseous mixture in one or more adsorption zones, by particulate adsorbent material inside a set of inner casings. Finally, the process includes extracting the target component, via the first set of ports, from the screw motion assisted modular rotary true moving bed, wherein the target component is desorbed from the particulate adsorbent material while passing through one or more desorption zones.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is a side view depicting a screw motion assisted modular rotary true moving bed for gas separation, according to some embodiments of the present disclosure.
FIG. 2 is a schematic view of different components and their corresponding placements within rotary true moving bed assembly of the screw motion assisted modular rotary true moving bed in accordance with some embodiments of the present disclosure.
FIG. 3 is a side view of different components in the rotary true moving bed assembly, according to some embodiments of the present disclosure.
FIG. 4 is a schematic view of the screw motion assisted modular rotary true moving bed for gas separation with gas flow details and different zones, according to some embodiments of the present disclosure.
FIG. 5 is a side view of an inner casing with gas slots and threading of the screw motion assisted modular rotary true moving bed for gas separation, in accordance with some embodiments of the present disclosure.
FIG. 6 is a schematic view of the inner casing with placement of a particulate adsorbent module in the rotary true moving bed assembly, according to some embodiments of the present disclosure.
FIG. 7 is a schematic view of a section of the inner casing with particulate adsorbent module and threading, according to some embodiments of the present disclosure.
FIG.8 depicts a schematic view of particulate adsorbent material bed with mesh, according to some embodiments of the present disclosure.
FIG.9 is a front view of cross section of the inner casing, according to some embodiments of the present disclosure.
FIG. 10 is a schematic view of different types of the inner casing, according to some embodiments of the present disclosure.
FIG. 11 depicts different types of one-way valve operation mechanism, according to some embodiments of the present disclosure.
FIG. 12 depicts different views of a static outer casing of the screw motion assisted modular rotary true moving bed for gas separation, in accordance with some embodiments of the present disclosure.
FIG. 13 is a side view of a prime driver outer casing with the static outer casing and the inner casing cutout of the screw motion assisted modular rotary true moving bed for gas separation, in accordance with some embodiments of the present disclosure.
FIG. 14 depicts a working mechanism example of the prime driver outer casing rotating and translating the inner casing, in accordance with some embodiments of the present disclosure.
FIG. 15 is a side view of a jacket and a second set of ports with the static outer casing and the inner casing cutout of the screw motion assisted modular rotary true moving bed for gas separation, in accordance with some embodiments of the present disclosure.
FIG. 16 depicts different views of the jacket and a second set of ports, in accordance with some embodiments of the present disclosure.
FIG. 17 is an exemplary flow diagram illustrating a process for gas separation using the screw motion assisted modular rotary true moving bed, according to some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

One of the most common methods for gas separation available in the industry such as fixed bed reactor has a major characteristic of plug-flow, which means that the concentration gradient does not exist in the radial directions and only occur spatially in the axial direction with minimal axial dispersion. The main limitation of using the fixed bed configuration is the difficulty in temperature control causing temperature gradients and local hotspots within the reactor which leads to a major safety concern. The heat transfer is also an issue with this type of reactor configuration. Another major limitation of the long-fixed bed configuration is the difficulty encountered by the gas phase in flowing through the packed bed. This results in highpressure drops, even at moderate flow rates. As a result of this, high compressor and pumping costs are incurred. The entire footprint of the setup becomes bigger as either high compressing power or higher length of the bed is required, which eventually results in high capital expenditure. The option of increasing the particle size for reducing the pressure drop is also not viable as this will result in an increase in mass and heat transfer resistances which will bring down the efficacy of the process considerably. Moreover, the fixed bed process must be operated cyclically with a bed going through various process steps, such as pressurization, adsorption, blow down, evacuation, requiring multiple parallel beds to cycle through the steps.

Another common method such as moving bed configuration, the adsorbent particles are moved through different sections, which are always operated at the same fixed conditions required for their specific purpose (adsorption, desorption, or cooling), reducing the pressure drop in comparison to an equivalent fixed bed. One of the limitations of this system is its increased complexity, which is due to the need to transport particles between separate reactors that must be done simultaneously in a sequential manner, restricting the potential of performing pressure swing techniques. On the contrary, the moving bed configuration overcomes one of the major drawbacks of temperature swing processes performed in fixed bed reactors which is the long cycle time is of the heating/cooling steps, significantly improving the separation process efficiency.

As an alternative to traditional moving bed configuration, a process using rotating reactor that can efficiently separate *CO*₂ from industrial flue gas has been developed. The corresponding system consists of disc-shaped adsorbent sheets with parallel passages that are divided into four sections. At any instant, two of the sections are exposed to flue gas for *CO*₂ adsorption, while the other two remain in the desorption chamber which consists of a heating section using steam that is maintained under vacuum and a cooling section to cool the adsorbent for next cycle. The separation efficiency and *CO*₂ purity in this concept depends on the efficiency of the sealing mechanism used to prevent the leakage between the sections operating under different pressures while the solid is rotating. Also, long cycle time should be expected in this configuration given that heating and cooling of the sorbent may be slow.

In a conventional moving bed adsorption reactor, particle attrition is an intrinsic issue. While a rotary bed has been used to solve this issue because particles do not move relative to each other, this reactor design faces challenges due to the difficulty in dividing the various zones in the process and stopping gas leakage across the zones. The process's continuity is also hindered when adsorbents are exhausted because they cannot adsorb to their maximum capacity due to degradation of their capacity. This would necessitate a disruptive repair cycle in operation.

Embodiments of the present disclosure provide a screw motion assisted modular rotary true moving bed for gas separation. The screw motion assisted modular rotary true moving bed is designed in such a way that particulate adsorbent material is bound by a front mesh and a back mesh on the sides of a particulate adsorbent module and this entire module is held up inside an inner casing. The entire bed rotates and moves on account of the rotary and translatory motion of the inner casing in which particulate adsorbent material is contained. This rotary motion helps greater area of the particulate adsorbent material bed to be exposed to the incoming gaseous mixture which enhances the adsorption capacity of the bed and lowers the amount of particulate adsorbent material required for a particular recovery and purity specification. This is a major process intensification achieved by the unique design of the assembly and its components. The screw like threading on the inner casing enables it to be both rotated and translated simultaneously by employing a prime driver outer casing having an electromechanical mechanism This unique mechanism of the component design and the method employed to move it enables to exploit the usage of the particulate adsorbent material in an efficient manner. Considering that the relative movement of particles is limited due to the constrained space, the attrition effects are much less pronounced. It is worth noting that the inner casing is made of slightly flexible materials such as braided tubing allowing it to turn around in bends. The various components and their functioning of the screw motion assisted modular rotary true moving bed for gas separation is explained further with the help of various figures.

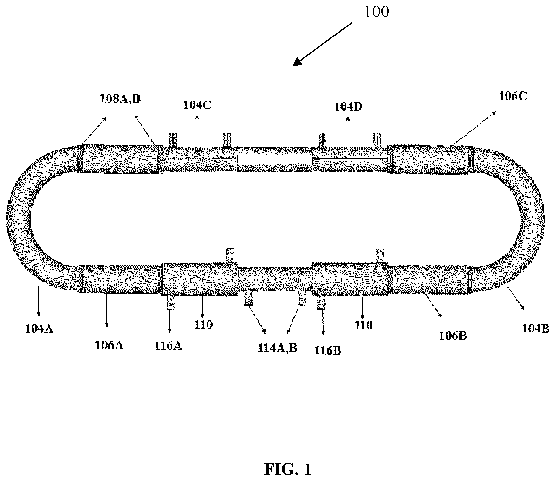

Referring now to the drawings, and more particularly to FIG. 1 through FIG. 17, where similar reference characters denote corresponding features consistently throughout the figures, there are shown preferred embodiments, and these embodiments are described in the context of the following exemplary system and/or method.

Reference numerals of one or more components of the screw motion assisted modular rotary true moving bed for gas separation, as depicted in the FIG. 1 through FIG. 17 are provided in Table 1 below for ease of description.

**Table 1**

| **S.NO** | **NAME OF COMPONENT** | **REFERENCE NUMERALS** |
|---|---|---|
| 1 | Screw motion assisted modular rotary true moving bed | 100 |
| 2 | Set of inner casings | 102A-N |
| 3 | Set of static outer casings | 104A-N |
| 4 | Set of prime driver outer casings | 106A-N |
| 5 | Set of rotary joints | 108A-N |
| 6 | Set of jackets | 110A-N |
| 7 | Set of gas slots | 112A-N |
| 8 | First set of ports | 114A-N |
| 9 | Second set of ports | 116A-N |

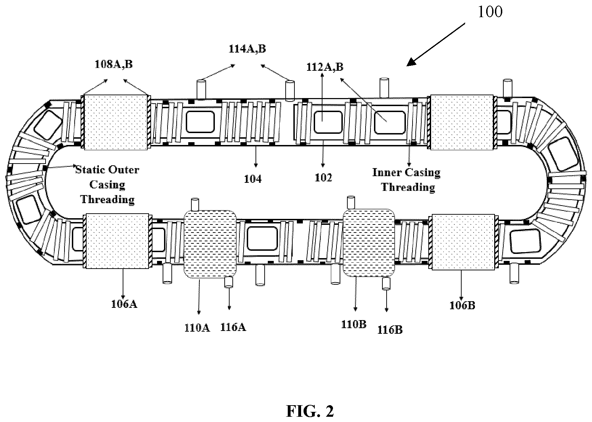

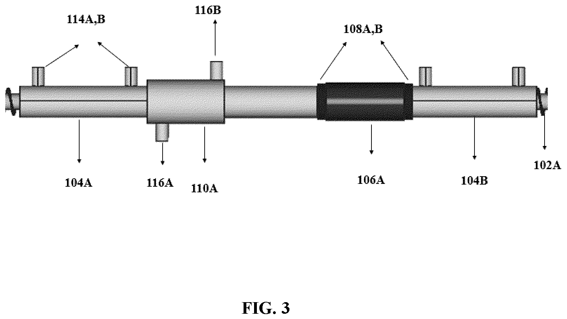

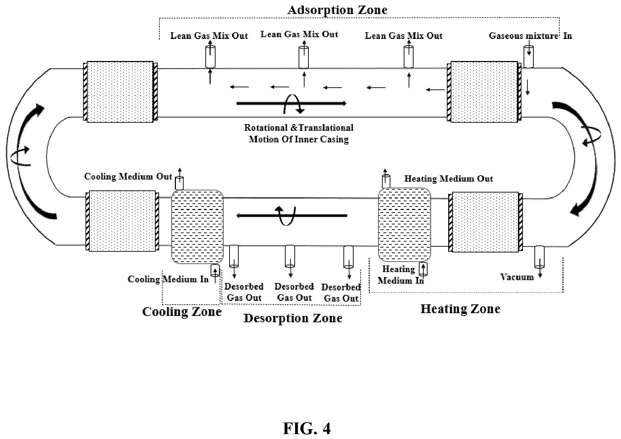

FIG. 1 is a side view depicting a screw motion assisted modular rotary true moving bed (100) for gas separation, according to some embodiments of the present disclosure. FIG. 2 is a schematic view of different components and their corresponding placements within rotary true moving bed assembly of the screw motion assisted modular rotary true moving bed in accordance with some embodiments of the present disclosure. The rotary true moving bed assembly includes a set of inner casings (102A-N), a set of static outer casings (104A-N), a set of prime driver outer casings (106A-N) and a set of rotary joints (108A-N). The rotary true moving bed assembly includes a plurality of zones such as one or more adsorption zones, one or more desorption zones, one or more heating zones and one or more cooling zones. The rotary true moving bed assembly facilitates any one of a temperature swing adsorption, a pressure swing adsorption, a vacuum swing adsorption, a concentration swing adsorption. The rotary true moving bed assembly can also facilitate a combination of two or more of the above mentioned regeneration methods. FIG. 3 is a side view of different components in the rotary true moving bed assembly, according to some embodiments of the present disclosure and FIG. 4 is a schematic view of the screw motion assisted modular rotary true moving bed for gas separation with gas flow details and different zones as mentioned above, according to some embodiments of the present disclosure.

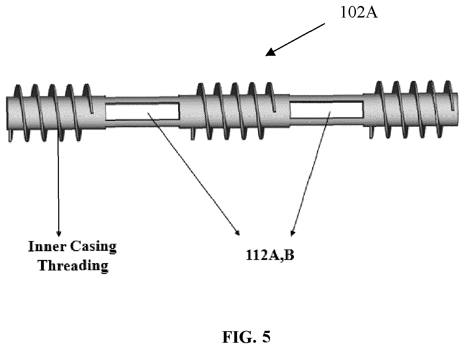

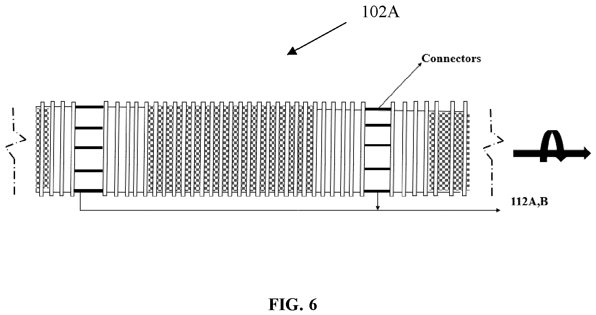

FIG. 5 is a side view of an inner casing (102A) with gas slots (112A-N) and threading of the screw motion assisted modular rotary true moving bed for gas separation, in accordance with some embodiments of the present disclosure. Each inner casing of the set of inner casings (102A-N) includes a plurality of particulate adsorbent modules, a set of gas slots (112A-N) and a threading on the external surface of the inner casing (102A). Each particulate adsorbent module of the plurality of particulate adsorbent modules are separated by a gap and includes a front one-way valve, a back one-way valve, a front mesh, and a back mesh. The front one-way valve and the back one-way valve enable one directional flow of a gaseous mixture through the inner casing (102A). The front mesh and the back mesh are fixed inside the inner casing (102A) and hold the particulate adsorbent material. FIG. 6 is a schematic view of the inner casing with placement of particulate adsorbent module in the rotary true moving bed assembly, according to some embodiments of the present disclosure. The path of the rotary true moving bed assembly is a closed loop as the particulate adsorbent material residing within the inner casing (102A) cannot be exposed to the outer surroundings. All the particulate adsorbent modules are interconnected with each other making a closed loop assembly. The path of the rotary true moving bed assembly can be circular, elliptical, or linear segments joined by curvilinear sections. The set of gas slots (112A-N) on an external surface of the inner casing (102A) enables flow of the gaseous mixture in and out of the inner casing. The threading on the external surface of the inner casing (102A) enables rotation and translation movement of the inner casing across the rotary true moving bed assembly inside the set of static outer casings (104A-N) and the set of prime driver outer casings (106A-N).

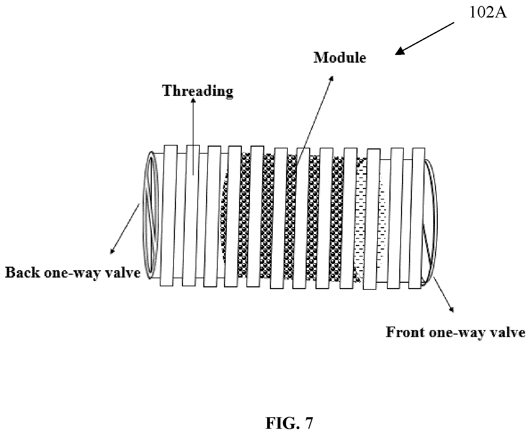

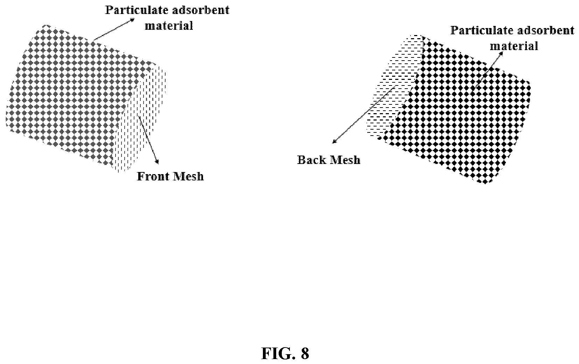

FIG. 7 is a schematic view of a section of the inner casing (102A) with the particulate adsorbent module and threading, according to some embodiments of the present disclosure. The particulate adsorbent material is placed inside the inner casing (102A) as can be seen in FIG. 7. The design is modular, which enables the inner casing (102A) to be opened and then filled up with the particulate adsorbent material up to the desired packing level. This is then held up at its place using metallic mesh (front mesh and back mesh) which can be put up after the inner casing (102A) has been filled with the particulate adsorbent material. FIG.8 depicts a schematic view of the particulate adsorbent material bed with the mesh, according to some embodiments of the present disclosure. The mesh opening size should be less than the size of the adsorbent particles. This is to ensure that the particulate adsorbent material does not come out of the mesh and only move within the desired section only. After the particulate adsorbent material is placed inside the inner casing (102A), one-way valves are put on the front and the back side of it to direct and control the gas flow within the inner casing through the particulate adsorbent module.

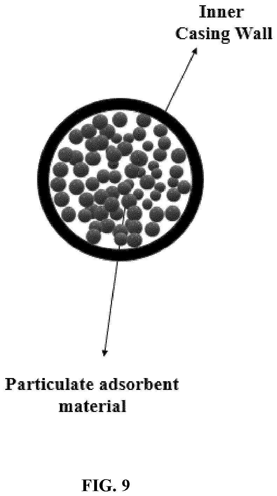

As can be seen in the FIG. 7 the front one-way valve allows the gas mixture to flow in and through the particulate adsorbent module. After the gas mixture is passed through the particulate adsorbent material, it exits from the back side through the back mesh. This lean gas mixture then flows out through the out one-way valve thus ensuring the unidirectional flow within the particulate adsorbent modules. The gaseous mixture will enter from the front one-way valve (which is entry only) and processed gas shall go out through the exit valve (which is exit only). Sufficient space (gap) is left between the one-way valves and the packing bed for the gas to enter and exit. This will ensure smooth flow and proper distribution of the gas during the adsorption and the desorption process. FIG.9 is a front view of cross section of the inner casing (102A), according to some embodiments of the present disclosure. FIG.9 shows the inner casing (102A) wall along with the particulate adsorbent material inside the inner casing.

This entire packed particulate adsorbent material, gap, the front mesh, the back mesh, the front one-way valve, and the back one-way valve assembly is inside the inner casing (102A) which is the component that carries this entire assembly through the different zones and facilitates the gas adsorption and desorption process. The inner casing (102A) has threading on its external surface as can be seen in FIG. 7. As a result of this, similar to the screw movement, the inner casing (102A) is able to rotate as well as translate across a zone. Both rotary and translatory movement facilitates the use of the particulate adsorbent material as it exposes a greater number of particles to incoming gaseous mixture resulting in better surface area availability as compared to static bed configurations. This happens mainly because of the rotary motion of the inner casing (102A) made possible by the screw like arrangement on account of the threading done on the inner casing. The entire inner casing (102A) inclusive of the particulate adsorbent modules and the valves (the front one-way valve and the back one-way valve) rotate along its axis along with the translatory motion as shown in FIG.6.

To facilitate the movement of the gas mixture in and out of the inner casing (102A), gas slots (112A-N)-are provided on the inner casing with openings inside them through which the gas can enter and exit. These slots can have openings across the entire circumference with metallic connectors between them as shown in FIG. 6. The gas enters or exits the inner casing (102A) through these slots (112A-N) in the gap between the particulate adsorbent modules. Further the gas enters the particulate adsorbent module through the front one-way valve and flows through the gap between the front one-way valve and the front mesh. This allows the gas flow to develop properly which ensures proper distribution of the gas mixture across the entire cross section of the inner casing (102A). Similarly, the outgoing lean gas exits through the out non return valve (the back one-way valve) and then exits the inner casing (102A) through the gas slot (112A). Initially, the lean gas exits through the back mesh and reaches the gap between the back one-way valve and the back mesh. The lean gas stabilizes at this gap and moves through it. Further the lean gas exits via the back one-way valve into the gap between the particulate adsorbent modules.

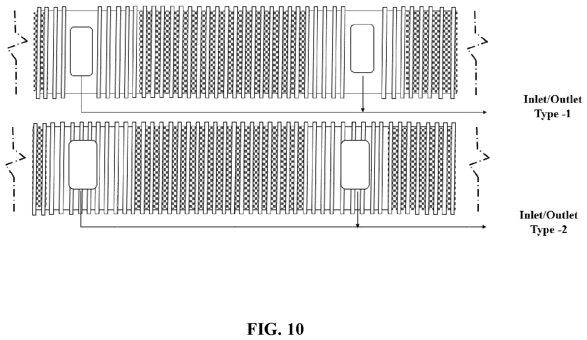

In an embodiment, different arrangements of gas slots can also be considered for the disclosed design. FIG. 10 is a schematic view of different types of the inner casing (102A), according to some embodiments of the present disclosure. As shown in inlet/outlet type 1 in FIG. 10, the inlet gas slot (112A) is created by cutting open a specific area of the inner casing (102A) which has been cleared of the threads instead of the entire circumference. In the inlet/outlet type 2 as shown in FIG. 10, instead of removing the threads and then creating an opening, the opening is created by cutting open a certain section of the threading itself.

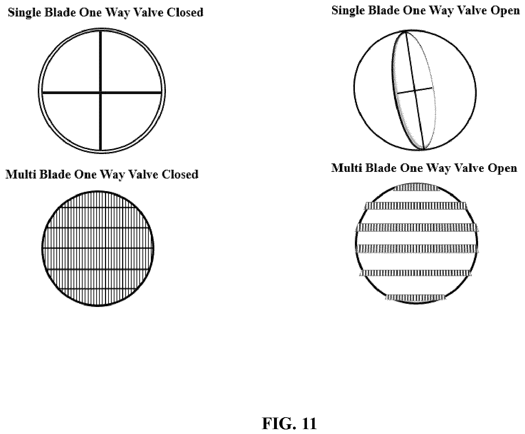

In an embodiment, different arrangements of one-way valves can also be considered for the disclosed design. FIG. 11 depicts different types of one-way valve operation mechanism, according to some embodiments of the present disclosure. As shown in FIG.11, single blade one-way valves and multi blade one-way valves are considered. The figure shows different operations such as opening and closing of single blade one-way valves and multi blade one-way valves.

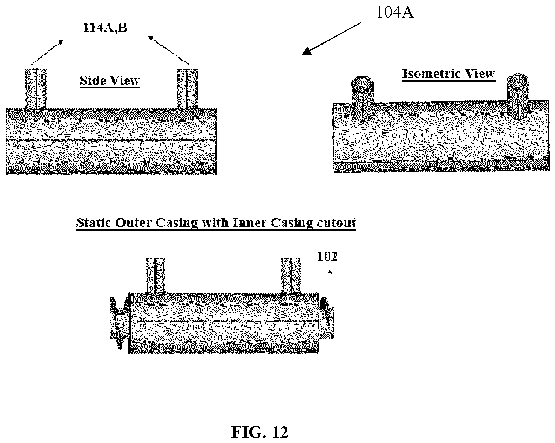

FIG. 12 depicts different views of the static outer casing (104A) of the screw motion assisted modular rotary true moving bed for gas separation, in accordance with some embodiments of the present disclosure. The set of static outer casings (104A-N) provides support and passage to the movement of the set of inner casings (102A-N). Each static outer casing (104A) includes a first set of ports (114A-N) and a threading on at least part of internal surface of the static outer casing. As seen in FIG. 2, the threading on the static outer casing (104A) in curved sections is less as compared to straight sections since the curved sections are smaller in length. The first set of ports (114A-N) are on the external surface of the static outer casing (104A) and enables flow of the gaseous mixture in and out of the static outer casing. The threading on the static outer casing (104A) provides support to the set of inner casings (102A-N). The small gap between the set of inner casings (102A-N) and the set of static outer casings (104AN) can be filled with a lubricant to smoothen the motion of the inner casing. The lubricant along with the threading also prevents gas leakage within a zone and provides isolation between the plurality of zones of the rotary true moving bed assembly. As shown in FIG. 12, the first set of ports (114A-N) are in the form of hollow extruded portions on the static outer casing (104A). When the gas slots (112A-N) in the inner casing (102A) comes in line with any of these ports in the static outer casing (104A), gas enters or exits through the inner casing via the static outer casing. This transfer and movement of gases happens only when both the openings in the inner and the static outer casing (104A) come in line together at the same time. The first set of ports (114AN) for the gas to enter and exit, are only provided in the static outer casing (104) and not in the prime driver outer casing (106A). The gas transfer between the static outer casing (104) and the inner casing (102A) can only take place in the zones where the openings in the inner casing are passing through the static outer casing (104) and not the prime driver outer casing (106A).

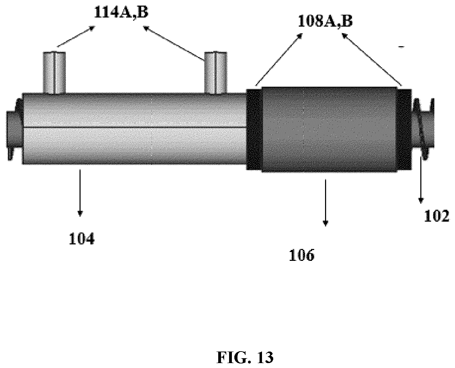

FIG. 13 is a side view of the prime driver outer casing (106A) with the static outer casing (104A) and the inner casing (102A) cutout of the screw motion assisted modular rotary true moving bed for gas separation, in accordance with some embodiments of the present disclosure. The set of prime driver outer casings (106AN) causes the set of inner casings (102A-N) to rotate and translate using an electro-mechanical mechanism. The set of prime driver outer casings (106A-N) rotate and translate the set of inner casings (102A-N) at different speeds at different time intervals within the true moving bed assembly. To maintain the distance between multiple inner casings (102A-N) and zones a simultaneous speed is needed. This is ensured by a uniform synchronous motion of the prime driver outer casings (106A-N) which moves the inner casings (102A-N) at the same speed. The prime driver outer casings (106AN) make the inner casings (102A-N) move at different speed or levels. The prime driver outer casings (106A-N) will have the ability to operate at different speeds but all of them within the assembly will synchronize and operate at a same speed only. These different speeds are required when the gas slots (112A-N) on the inner casings (102AN) are passing through the section of the static outer casing (104A) where the ports are not present and gas exchange is blocked. Here the inner casings (102A-N) are needed to move at a faster speed so that the time spent in this section is minimal. Further when the gas exchange happens when the slots are exposed to the ports, the inner casings need to be moved at a slower speed to provide sufficient time for adsorption, desorption, heat exchange etc. to take place. So therefore, this arrangement is provided to move the inner casing (102A) as per the requirement at different speeds.

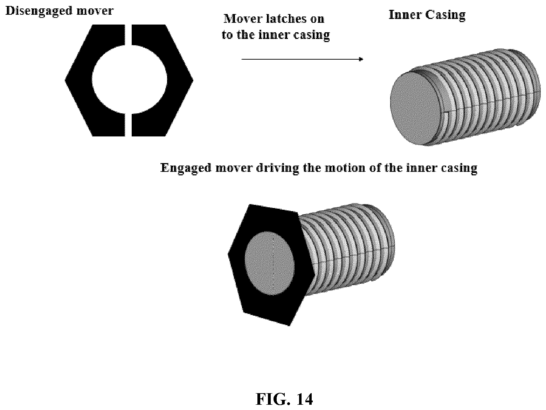

FIG. 14 depicts a working mechanism example of the prime driver outer casing (106A) rotating and translating the inner casing (102A), in accordance with some embodiments of the present disclosure. The rotary and the translatory motion of the inner casings (102A-N) can be achieved mainly by two types of electro-mechanical mechanisms. For the first type of mechanism, the inner casing (102A) having external threading is tightly held by a split nut kind of mechanism. This will grab on to the inner casing (102A) tightly with its pitch matching with that of the threading and will then make the inner casing (102A) rotate and translate. After it has made the inner casing (102A) reach up to a certain location it will then disengage and come back to its original position. Multiple such split nuts can be used in a relay kind of manner with one engaging up with the inner casing (102A) after it has been brought up to a certain position by another nut which has now disengaged. This split nut mechanism is housed in the prime driver outer casing (106A). Multiple such prime driver outer casings (106A-N) can be present in the entire assembly. For the second type of mechanism, electromagnetic methods are primarily employed. These are similar to how a motor is being moved. The stator part and the rotor are housed inside the prime driver outer casing (106A). The rotor is then used for rotating and moving the inner casing. Bushes are used to reduce friction and provide sealing. Multiple such prime driver outer casings (106A-N) having the stator and rotor components is used within the entire assembly for driving the motion of the inner casing (102A).

When the inner casing (102A) moves from the static outer casing (104A) to the prime driver outer casing (106A) and vice versa, atmospheric air could enter the inner casing. This could affect the adsorption capacity of the particulate adsorbent material as it might get contaminated because of the contaminants present in the air. To prevent the openings of the inner casing (102A) getting exposed to the atmosphere, the prime driver outer casing (106A) and the static outer casing (104A) are coupled using the set of rotary joints (108A-N) which are leak proof in nature. Also, the desorbed gas might escape through this route when the inner casing's openings are exposed to the environment. In order to prevent this, the prime driver outer casing (106A) and the static outer casing (104A) are coupled using the set of rotary joints (108A-N) which are leak proof in nature as shown in FIG.4.

Wherever there is a prime driver outer casing (106A) followed by a static outer casing (104A) and vice versa a rotary leak proof joint is put in place which couples these two sections together. It also ensures that the prime driver outer casing (106A) faces minimal friction while rotating as lubrication could be done at these joints. Because of this the entire outer section comprising the static outer casing (104A), the prime driver outer casing (106A) and the rotary joints (108A) almost becomes continuous, rendering the exposure of the inner casing's openings to the outside atmosphere to almost negligible levels. Also, there are no openings for the gas to come in or out from the assembly except the static outer casing (104A) which has the first set of ports (114A-N). This ensures proper isolation between the sections and prevents chances of gas leakage from one section to another.

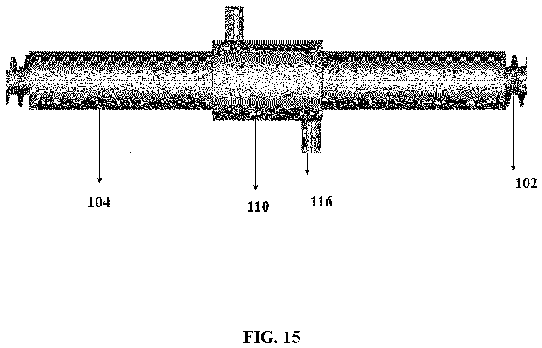

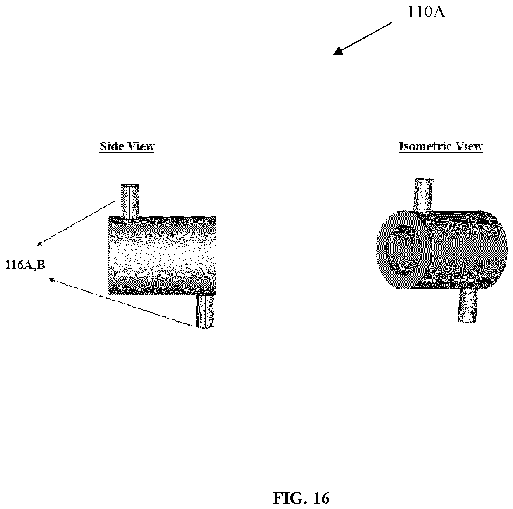

Depending on the process that is being employed for carrying out the gas separation, heating and cooling of the particulate adsorbent material is needed. For example, if Temperature Swing Adsorption (TSA) is used to carry out gas separation, temperature of the particulate adsorbent material needs to be varied using heat transfer from external sources. To achieve this, a set of jackets (110A-N) is introduced as shown in FIG.15. FIG. 15 is a sideview of the jacket (110A) and the second set of ports (116AN) with the static outer casing and the inner casing cutout of the screw motion assisted modular rotary true moving bed for gas separation, in accordance with some embodiments of the present disclosure. The set of jackets (110A-N) provides an external covering over the set of static outer casings (104A-N) for the one or more heating zones and the one or more cooling zones of the true moving bed during the temperature swing adsorption. The jacket (1 10A) is an extended part on top of the static outer casing (104A) with provisions for heating and cooling medium to come in and out via the second set of ports (116A-N). The static outer casing continuously runs through this jacket with the inner casing (102A) being held inside it. The jacket (110A) serves to heat or cool the static outer casing (104) containing the inner casing (102A). Once the static outer casing (104A) gets heated or cooled, this will in turn heat or cool up the particulate adsorbent material when the inner casing (102A) passes through these heated/cooled sections by transferring the heat to and from the inner casing walls. This heating or cooling can be achieved by passing a heating or cooling medium through the second set of ports (116A-N). Since the jacket (110A) is outside the static outer casing (104A), the inner casing (102A) is completely isolated from the heating or cooling medium being used and only the heat transfer takes place with no material interaction between the particulate adsorbent material and the heating or cooling medium being circulated inside the jacket (110A). FIG. 16 depicts different views (side view and isometric view shown) of the jacket (110A) and a second set of ports, in accordance with some embodiments of the present disclosure. Since the jacket (110A) is a part of the static outer casing (104A) itself as can be seen in FIG. 15, there is no chance of leakage of the heating or cooling medium and it will only flow through the second set of ports (116A-N). The heat transfer from the jacket (110A) could be controlled by controlling the flow across the jacket which can be done by appropriately sizing the second set of ports (116A-N) and the jacket volume itself. However, during a direct heating of the particulate adsorbent material, the first set of ports (114A-N) facilitates in and out movement of a heating medium or a cooling medium from the true moving bed assembly.

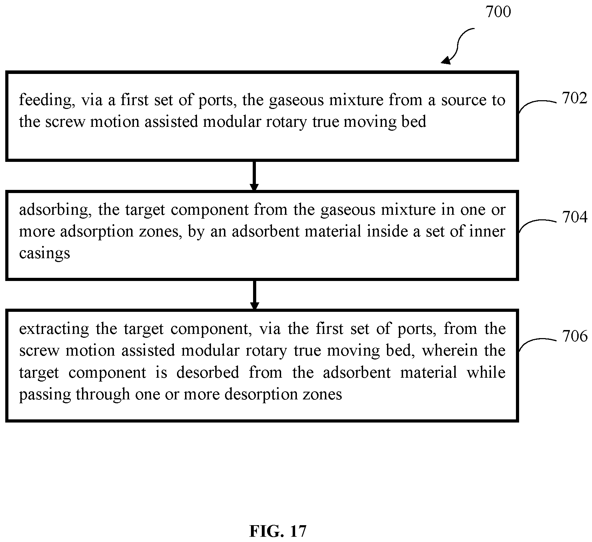

FIG. 17 is an exemplary flow diagram illustrating a process for separation of a target component using the screw motion assisted modular rotary true moving bed, according to some embodiments of the present disclosure. FIG. 17 is explained in conjunction with the components explained for FIG. 1 and FIG. 2. At step 702 of the process 700, the gaseous mixture from a source is fed to the screw motion assisted modular rotary true moving bed via the first set of ports (114A-N) of the static outer casing(104A-N). The source may be a combustion engine, a process equipment which produces flue gases and so on. The configuration can have many inner casings rotating and translating through it depending on the bed length and the amount of particulate adsorbent material required to achieve the desired recovery and purity. At step 704 of the process 700, the target component from the gaseous mixture is adsorbed in one or more adsorption zones, by the particulate adsorbent material inside a set of inner casings (102A-N). The inner casing (102A) then moves to the desorption zone. At step 706 of the process 700, the target component is extracted from the screw motion assisted modular rotary true moving bed via the first set of ports (114A-N). During the TSA process for gas separation, the heating medium travels through the set of jackets (110A-N) via the second set of ports (116A-N), meets the static outer casing (104A) and heats it up. This then heats up the inner casing (102A) which travels through this section after having passed through the adsorption zone. Having passed through the heating zone, the heated inner casing (102A) enters the desorption zone (104A) of the assembly where the openings in the gas slots (112A-N) of the inner casing (102A) get exposed to the first set of ports of the static outer casing. The desorbed gas now starts coming out the module, via the opening in the inner casing (102A) and into the static outer casing (104A). From here, this desorbed gas (target component) comes out of the entire assembly through the first set of ports (114A-N) provided in the static outer casing (104A). To facilitate and enhance this process, vacuum could be applied to the first set of ports (114A-N) in the static outer casing (104). As the design is modular in nature several heating and desorbing sections could be put up next to one another to achieve the desired recovery and purity. After the gas has been desorbed, the particulate adsorbent material need to be cooled down in order to make them ready for the next adsorption cycle as adsorption takes place in a particular temperature range only. This is achieved when the inner casing (102A) travels through the cooling zone after it has passed through the desorption zone. The jacket (110A) employed here has a cooling medium flowing in and out through it via the second set of ports (116A-N). This cools down the particulate adsorbent material by taking away the heat from the particulate adsorbent material via the inner and the static outer casing (104A) through an indirect mechanism comprising of conductive and convective heat transfer.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein provides a screw motion assisted modular rotary true moving bed. In the disclosed gas separator, the unique design of the inner casing with particulate adsorbent material helps in having better heat transfer characteristics within the assembly and lesser chances of local hotspots and gradients been formed within the bed. This is because of greater exposure of the particulate adsorbent material which results in higher surface area availability. This results in higher efficiency for heat transfer and enhances the desorption dynamics both for temperature and pressure swing based operations. The tight coupling between the inner and static outer casing (104A), the one-way valves along with the translatory and rotary motion of the inner casing provides efficient isolation between various zones and prevents leakage of various gas streams from the assembly. The gas streams are forced to flow in a unidirectional counter current manner through the inner casing because of minimal clearance between the inner and static outer casing (104A) and by the forward motion of the inner casing.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

It is intended that the disclosure and examples be considered as exemplary only, with a true scope of disclosed embodiments being indicated by the following claims.

## Claims

1. A screw motion assisted modular rotary true moving bed (100) for gas separation comprising:
a rotary true moving bed assembly forming a closed loop comprising a set of inner casings (102A-N), a set of static outer casings (104A-N), a set of prime driver outer casings (106A-N), and a set of rotary joints (108A-N),
each inner casing (102A) of the set of inner casings (102A-N) comprising:
a plurality of modules, wherein each module of the plurality of modules separated by a gap comprises:
(i) a front one-way valve and a back one-way valve enabling one directional flow of a gaseous mixture through the inner casing (102A), and
(ii) a front mesh and a back mesh holding particulate adsorbent material, wherein the front mesh and the back mesh is fixed inside the inner casing (102A),
a set of gas slots (112A-N) on an external surface of the inner casing (102A) enabling flow of the gaseous mixture in and out of the inner casing,
and
a threading on the external surface of the inner casing (102A) enabling rotation and translation of the inner casing across the rotary true moving bed assembly inside the set of static outer casings (104A-N) and the set of prime driver outer casings (106A-N),
the set of static outer casings (104A-N) providing support and passage to movement of the set of inner casings (102A-N), wherein each static outer casing (104A) comprises:
(i) a first set of ports (1 14A-N) on an external surface of the static outer casing (104A), wherein the first set of ports (114A-N) enables flow of the gaseous mixture in and out of the static outer casing (104A), and
(ii) a threading on at least part of internal surface of the static outer casing (104A) provides support to the set of inner casings (102A-N),
the set of prime driver outer casings (106A-N) causing the set of inner casings (102A-N) to rotate and translate using an electro- mechanical mechanism, and
the set of rotary joints (108A-N) providing leak proof coupling between the set of static outer casings (104A-N) and the set of prime driver outer casings (106A-N).

2. The screw motion assisted modular rotary true moving bed of claim 1, wherein the threading on at least part of the internal surface of the static outer casing (104A) enables prevention of gas leakage within a zone and isolation between a plurality of zones of the rotary true moving bed assembly, and wherein the plurality of zones includes one or more adsorption zones, one or more desorption zones, one or more heating zones, and one or more cooling zones.

3. The screw motion assisted modular rotary true moving bed of claim 1, comprises a set of jackets (110A-N), providing an external covering over the set of static outer casings (104A-N) for (i) the one or more heating zones and (ii) the one or more cooling zones of the rotary true moving bed assembly during the temperature swing adsorption, wherein the set of jackets (110A-N) comprises a second set of ports (116A-N) for circulating heating or cooling medium.

4. The screw motion assisted modular rotary true moving bed of claim 1, wherein during a direct heating of the particulate adsorbent material, the first set of ports (114A-N) facilitates in and out movement of a heating medium or a cooling medium from the rotary true moving bed assembly, and
wherein during an indirect heating of the particulate adsorbent material,
the heating medium entering via the second set of ports (116AN) circulates through the set of jackets (110A-N) to heat walls of (i) the set of static outer casings (104A-N) and (ii) the set of inner casings (102A-N) in the one or more heating zones, and
the cooling medium entering via the second set of ports (116AN) circulates through the set of jackets (110A-N) to cool walls of (i) the set of static outer casings (104A-N) and (ii) the set of inner casings (102A-N) in the one or more cooling zones.

5. The screw motion assisted modular rotary true moving bed of claim 1, wherein the set of prime driver outer casings (106A-N) rotate and translate the set of inner casings (102A-N) at different speed at different time intervals within the rotary true moving bed assembly.

6. The screw motion assisted modular rotary true moving bed of claim 1, wherein the rotary true moving bed assembly facilitates at least one of (i) a temperature swing adsorption, (ii) a pressure swing adsorption, (iii) a vacuum swing adsorption, (iv) concentration swing adsorption, or (v) a combination thereof.

7. The screw motion assisted modular rotary true moving bed of claim 1, wherein a lubricant is used in a gap between the set of inner casings (102A-N) and the set of static outer casings (104A-N) to smoothen the motion.

8. A process for separation of a target component from a gaseous mixture using a screw motion assisted modular rotary true moving bed (700), comprising,
feeding, via a first set of ports, the gaseous mixture from a source to the screw motion assisted modular rotary true moving bed (702),
adsorbing, the target component from the gaseous mixture in one or more adsorption zones, by particulate adsorbent material inside a set of inner casings (704),
extracting the target component, via the first set of ports, from the screw motion assisted modular rotary true moving bed, wherein the target component is desorbed from the particulate adsorbent material while passing through one or more desorption zones (706),
wherein the screw motion assisted modular rotary true moving bed comprises:
a rotary true moving bed assembly forming a closed loop comprising the set of inner casings, a set of static outer casings, a set of prime driver outer casings, and a set of rotary joints,
each inner casing of the set of inner casings comprising:
a plurality of modules, wherein each module of the plurality of modules separated by a gap comprises:
(i) a front one-way valve and a back one-way valve enabling one directional flow of a gaseous mixture through the inner casing, and
(ii) a front mesh and a back mesh holding the particulate adsorbent material, wherein the front mesh and the back mesh is fixed inside the inner casing,
a set of gas slots on an external surface of the inner casing enabling flow of the gaseous mixture in and out of the inner casing,
and
a threading on the external surface of the inner casing enabling rotation and translation of the inner casing across the rotary true moving bed assembly inside the set of static outer casings and the set of prime driver outer casings,
the set of static outer casings providing support and passage to movement of the set of inner casings, wherein each static outer casing comprises:
(i) the first set of ports on an external surface of the static outer casing, wherein the first set of ports enables flow of the gaseous mixture in and out of the static outer casing, and
(ii) a threading on at least part of internal surface of the static outer casing providing support to the set of inner casings,
the set of prime driver outer casings causing the set of inner casings to move through an electro- mechanical mechanism, and
the set of rotary joints providing leak proof coupling between the set of static outer casings and the set of prime driver outer casings.

9. The process of claim 8, wherein the threading on at least part of the internal surface of the static outer casing enables prevention of gas leakage within a zone and isolation between a plurality of zones of the rotary true moving bed assembly, and wherein the plurality of zones includes one or more adsorption zones, one or more desorption zones, one or more heating zones, and one or more cooling zones.

10. The process of claim 8, comprises a set of jackets, providing an external covering over the set of static outer casings for (i) the one or more heating zones and (ii) the one or more cooling zones of the rotary true moving bed assembly during the temperature swing adsorption, wherein the set of jackets comprises a second set of ports for circulating heating or cooling medium.

11. The process of claim 8, wherein during a direct heating of the particulate adsorbent material, the first set of ports facilitates in and out movement of a heating medium and a cooling medium from the rotary true moving bed assembly, and wherein during an indirect heating of the particulate adsorbent material,
the heating medium entering via the second set of ports circulates through the set of jackets to heat walls of (i) the set of static outer casings and (ii) the set of inner casings in the one or more heating zones, and
the cooling medium entering via the second set of ports circulates through the set of jackets to cool walls of (i) the set of static outer casings and (ii) the set of inner casings in the one or more cooling zones.

12. The process of claim 8, wherein the set of prime driver outer casings rotate and translate the set of inner casings at different speed at different time intervals within the rotary true moving bed assembly.

13. The process of claim 8, wherein the rotary true moving bed assembly facilitates at least one of (i) a temperature swing adsorption, (ii) a pressure swing adsorption, (iii) a vacuum swing adsorption (iv) concentration swing adsorption or (v) a combination thereof.

14. The process of claim 8, wherein a lubricant is used in a gap between the set of inner casings and the set of static outer casings to smoothen the motion.
